# EUROPÄISCHE PATENTANMELDUNG

(11) **EP 2 910 457 A1**
(43) Veröffentlichungstag der Anmeldung: **26.08.2015**
(21) Anmeldenummer: 15155577.8
(22) Anmeldetag: 18.02.2015
(51) Int. Cl.: B62D 59/04

(54) **Rangierantrieb mit Spritzschutz für Anhänger oder dgl.**

(30) Priorität: 19.02.2014 DE 202014100738 U
(71) Anmelder: Truma Gerätetechnik GmbH & Co. KG, 85640 Putzbrunn (DE)
(72) Erfinder: Venschott, Mathias, 81825 München (DE); Möhring, Mario, 85408 Gammelsdorf (DE); Müller, Jochen, 85665 Moosach (DE); Laging, Johannes, 81829 München (DE); Wegmann, Philipp, 81541 München (DE); Jäger, Markus, 85635 Höhenkirchen-Siegertsbrunn (DE)
(74) Vertreter: Prinz & Partner mbB

(57) **Zusammenfassung**

Die Erfindung betrifft einen Rangierantrieb (10) für einen Anhänger oder dgl., mit einem Antriebsmotor, einer Antriebsrolle (14) für ein Rad (18) des Anhängers und einem Spritzschutz (20), der mit dem Rangierantrieb zu einer Baugruppe integriert ist.

## Beschreibung

Die Erfindung betrifft einen Rangierantrieb für einen Anhänger oder dgl., mit einem Antriebsmotor und einer Antriebsrolle für ein Rad des Anhängers. Die Erfindung betrifft außerdem einen Anhänger mit einem Rangierantrieb.

Von Lastkraftwagen ist bekannt, dass in Fahrtrichtung gesehen hinter den hinteren Rädern ein Spritzschutz angeordnet ist. Dieser ist meist als Gummioder Kunststofflappen ausgeführt und soll verhindern, dass Wasser, Schmutz oder gar Steinchen vom Reifen hin zu einem hinter dem Lastkraftwagen fahrenden Fahrzeug geschleudert werden.

Die Aufgabe der Erfindung besteht darin, ein hinter dem Anhänger fahrendes Fahrzeug vor Wasser, Schmutz oder gar Steinchen zu schützen, die von den Rädern des Anhängers aufgewirbelt werden.

Zur Lösung dieser Aufgabe ist erfindungsgemäß bei einem Rangierantrieb der eingangs genannten Art ein Spritzschutz vorgesehen, der mit dem Rangierantrieb zu einer Baugruppe integriert ist. Die Erfindung beruht auf der Erkenntnis, dass ein solcher Spritzschutz, um effektiv zu sein, möglichst nahe hinter dem (hinteren) Rad des Anhängers angeordnet sein sollte, also in einem Bereich, in welchem sich auch der Rangierantrieb befindet, falls der Anhänger mit einem solchen ausgestattet ist. In diesem Fall ist es besonders vorteilhaft, wenn der Spritzschutz dahingehend mit dem Rangierantrieb zu einer Baugruppe integriert ist, dass er entweder in unmittelbarer Nähe des Rangierantriebs angeordnet oder am Rangierantrieb selbst angebracht ist.

Vorzugsweise ist vorgesehen, dass der Spritzschutz zwischen einer Ausgangsstellung und einer Rangierstellung bewegbar ist. In der Ausgangsstellung gewährleistet der Spritzschutz einen optimalen Schutz für alle Fahrzeuge, die hinter dem Anhänger fahren. In der Rangierstellung ermöglicht der Spritzschutz, dass die Antriebsrolle des Rangierantriebs ungehindert am Rad des Anhängers angreifen und dieses drehen kann.

Gemäß einer Ausgestaltung der Erfindung ist ein Haken vorgesehen, mit dem der Spitzschutz in der Rangierstellung fixierbar ist. Hierbei handelt es sich um eine technisch besonders einfach zu realisierende Lösung, bei der der Spritzschutz bzw. der untere Abschnitt des Spritzschutzes nach oben bewegt und eingehängt wird, sodass die Antriebsrolle ungehindert mit dem Rad des Anhängers in Eingriff gebracht werden kann.

Gemäß einer alternativen Ausgestaltung ist vorgesehen, dass der Spritzschutz lösbar angebracht ist. Diese Ausgestaltung beruht auf dem Grundgedanken, den Spritzschutz im Normalbetrieb, also wenn der Anhänger gezogen wird, in einer geeigneten Position am Anhänger oder am Rangierantrieb angebracht ist. Wenn der Anhänger allerdings mittels des Rangierantriebs verfahren werden soll, wird der Spritzschutz gelöst und entfernt, sodass die Antriebsrolle ungehindert am Rad des Anhängers angreifen kann.

Gemäß einer Ausgestaltung ist eine Clipsverbindung vorgesehen, mittels der der Spritzschutz angeclipst werden kann. Alternativ ist eine Halterung vorgesehen, in die der Spritzschutz seitlich einschiebbar ist. Bei beiden Ausgestaltungen ist ein geringer technischer Aufwand nötig, um den Spritzschutz am Anhänger oder am Rangierantrieb anzubringen. Besonders vorteilhaft ist auch, dass der Spritzschutz ohne Werkzeug angebracht bzw. gelöst werden kann.

Gemäß einer alternativen Ausführungsform ist vorgesehen, dass der Spritzschutz Teil des Rangierantriebs ist. Hierbei ist es nicht mehr nötig, den Spritzschutz dann zu entfernen, wenn der Anhänger mittels des Rangierantriebs verfahren werden soll. Stattdessen ist der Spritzschutz so ausgeführt, dass er das Verfahren des Anhängers mittels des Rangierantriebs nicht behindert.

Gemäß einer Ausgestaltung ist vorgesehen, dass der Spritzschutz als Teil eines Gehäuses des Rangierantriebs ausgeführt ist. Der Spritzschutz kann also als Verlängerung oder Vorsprung des Gehäuses ausgeführt sein und auf diese Weise die gewünschte Funktion bereitstellen.

Der Spritzschutz kann alternativ auch am Rangierantrieb angebracht sein, beispielsweise durch eine Schraubverbindung oder Ähnliches. Dies ermöglicht, den Spritzschutz bei Bedarf auszutauschen.

Gemäß einer Ausgestaltung der Erfindung ist vorgesehen, dass der Rangierantrieb mit einem Andruckmechanismus versehen ist, mit dem er und damit die Antriebsrolle aus einer Ausgangsstellung in eine Rangierstellung verstellt werden kann, und dass der Spritzschutz so am Rangierantrieb angeordnet ist, dass er sich in der Rangierstellung befindet, wenn sich der Rangierantrieb in der Rangierstellung befindet. Diese Ausführungsform beruht auf dem Grundgedanken, dass eine Verstellbewegung, die der Rangierantrieb ausführt, um die Antriebsrolle gegen das Rad des Anhängers zu drücken, gleichzeitig dafür verwendet wird, den Spritzschutz aus der Ausgangsstellung in die Rangierstellung zu verstellen.

Gemäß einer alternativen Ausgestaltung ist vorgesehen, dass der Rangierantrieb mit einem Andruckmechanismus versehen ist, mit dem die Antriebsrolle aus einer Ausgangsstellung in eine Rangierstellung verstellt werden kann, und dass der Spritzschutz mit dem Andruckmechanismus gekoppelt ist, sodass er automatisch aus der Ausgangsstellung in die Rangierstellung gebracht wird, wenn die Antriebsrolle aus der Ausgangsstellung in die Rangierstellung gebracht wird. Diese Ausführungsform beruht auf dem Grundgedanken, den Spritzschutz aktiv dann zu verstellen, wenn die Antriebsrolle mit dem Rad des Anhängers in Eingriff gebracht wird. Diese aktive Verstellung kann entweder dadurch erfolgen, dass der Spritzschutz in irgendeiner Weise mit dem Andruckmechanismus gekoppelt ist und dadurch verstellt wird, wenn dieser die Antriebsrolle verstellt, oder dass für den Spritzschutz ein separater Antrieb vorgesehen ist, der dann betätigt wird, wenn auch der Andruckmechanismus betätigt wird.

Wenn der Andruckmechanismus betätigt wird, kann der Spritzschutz beispielsweise seitlich aus dem Bereich zwischen der Antriebsrolle und dem Rad verstellt wird, also allgemein in einer Richtung parallel zur Drehachse des Rades des Anhängers. Alternativ kann vorgesehen sein, dass der Spritzschutz in vertikaler Richtung aus dem Bereich zwischen der Antriebsrolle und dem Rad verstellt wird. Es kann auch vorgesehen sein, dass der Spritzschutz zweiteilig so ausgeführt ist, dass die beiden Teile auseinandergezogen werden können, sodass zwischen ihnen ein Freiraum für die Antriebsrolle gebildet wird. Bei dieser Ausgestaltung wird also zwischen den beiden Teilen des Spritzschutzes eine Art Fenster geöffnet, durch das hindurch die Antriebsrolle am Rad des Anhängers angreifen kann.

Es kann auch vorgesehen sein, dass die Antriebsrolle mit einer Verkleidung versehen ist, welche sie zumindest auf der dem Rad zugewandten Seite verkleidet, und dass der Spritzschutz an der Verkleidung vorgesehen ist. Bei dieser Ausgestaltung kann die Antriebsrolle und damit auch der Rangierantrieb vor Verschmutzungen geschützt werden, wenn sich die Antriebsrolle in der Ausgangsstellung befindet.

Gemäß einer Weiterbildung dieser Ausführungsform kann vorgesehen sein, dass die Verkleidung aus zumindest zwei Teilen besteht, die relativ zueinander zwischen einer Ausgangsstellung, in der die Antriebsrolle zumindest auf der dem Rad zugewandten Seite umschlossen ist, und einer Rangierstellung verstellbar ist, in der die Antriebsrolle mit dem Rad in Eingriff gebracht werden kann. Eine solche Verkleidung kann mit geringem Aufwand in platzsparender Weise geöffnet werden.

Gemäß einer Ausgestaltung kann dabei vorgesehen sein, dass die beiden Teile als ineinander verschiebbare Schalen ausgeführt sind. In diesem Fall ist kein zusätzlicher radialer Freiraum erforderlich, wenn die Verkleidung geöffnet werden muss; die beiden Schalen können konzentrisch relativ zueinander verdreht werden.

Gemäß einer alternativen Ausgestaltung der Erfindung ist vorgesehen, dass der Spritzschutz mit einer Öffnung für die Antriebsrolle versehen ist. Bei dieser Ausgestaltung ist es nicht zwingend notwendig, den Spritzschutz zu entfernen oder in einer Rangierstellung zu verstellen; der zum Verfahren des Anhängers nötige Kontakt zwischen Antriebsrolle und Rad des Anhängers erfolgt durch die Öffnung des Spritzschutzes hindurch.

Es kann auch vorgesehen sein, dass der Spritzschutz nach Art eines Rollos ausgeführt ist, also beispielsweise in vertikaler Richtung aus einer heruntergezogenen Ausgangsstellung in eine eingerollte Rangierstellung verstellbar ist.

Es kann auch vorgesehen sein, dass der Spritzschutz als Abreißabschnitt einer Rollobahn ausgeführt ist. Dies ermöglicht, einen gerade benutzten Abschnitt der Rollobahn, also den als Spritzschutz wirkenden Abschnitt, dann abzureißen und dadurch zu entfernen, wenn die Antriebsrolle am Rad des Anhängers angreifen soll. Dabei kann der derzeit als Spritzschutz dienende Abschnitt der Rollobahn entweder von Hand abgerissen werden oder auch dadurch, dass er zwischen dem Rad des Anhängers und der Antriebsrolle des Rangierantriebs zunächst eingeklemmt und dann abgerissen wird. Wenn der Anhänger wieder mit der Zugmaschine gekoppelt wird, wird ein "neuer" Abschnitt der Rollobahn nach unten gezogen, sodass wieder ein Spritzschutz vorhanden ist. Es kann auch vorgesehen sein, dass die Rollobahn von einem Antrieb automatisiert um eine vorbestimmte Strecke nach unten verstellt wird.

Gemäß einer Ausgestaltung der Erfindung ist der Spritzschutz mit einem Reflektor versehen. Dies erhöht die Verkehrssicherheit.

Dem Spritzschutz kann auch ein Sensor zugeordnet sein. Auf diese Weise können zusätzliche Funktionen implementiert werden.

Beispielsweise kann der Sensor ein Schlingersensor seiner. Dies ermöglicht, aus den Bewegungen des Spritzschutzes ein eventuelles Schlingern des Anhängers zu erkennen.

Der Sensor kann auch ein Straßenzustandssensor sein. Die Informationen des Straßenzustandssensors können dann einer Steuerung bereitgestellt werden, die beispielsweise die Federung des Anhängers oder einen Schlingerdämpfer ansteuert.

Es kann auch vorgesehen sein, dass der Sensor ein Neigungssensor ist. Die Signale des Neigungssensors können einem Bediener entweder im Anhänger oder auch an einer Steuerung für den Rangierantrieb zur Verfügung gestellt werden, damit es dem Bediener erleichtert wird, den Anhänger exakt horizontal auszurichten.

Gemäß einer Ausgestaltung der Erfindung ist vorgesehen, dass eine Radverhüllung integriert ist. Dies ist besonders vorteilhaft für sogenannte Dauercamper.

In den Rangierantrieb kann auch ein Spoiler integriert sein. Hierdurch ergeben sich Vorteile für die Aerodynamik.

Es kann auch vorgesehen sein, dass der Spritzschutz eine Oberfläche mit Nanoeffekt aufweist. Dies verringert die Verschmutzungsneigung.

Gemäß einer Ausgestaltung der Erfindung ist vorgesehen, dass der Spritzschutz als Auffahrkeil ausgeführt ist. Dies ermöglicht, den Spritzschutz, wenn er während des Rangierens des Anhängers abgenommen ist, zum horizontalen Ausrichten des Anhängers zu verwenden.

Gemäß einer Ausgestaltung der Erfindung ist vorgesehen, dass der Spritzschutz als Reinigungselement für die Antriebsrolle ausgeführt ist. Dadurch kann die Antriebsrolle dann gereinigt werden, wenn sie entweder nach einer langen Fahrt des Anhängers verschmutzt ist oder nachdem der Anhängers mittels des Rangierantriebs auf einem schmutzigen Untergrund verfahren wurde.

Gemäß einer weiteren Ausgestaltung der Erfindung kann vorgesehen sein, dass der Spritzschutz als Verschlusselement für eine Bodenöffnung des Anhängers ausgeführt ist. In diesem Fall können, beispielsweise im Winterbetrieb, die dann nicht benötigten Auslässe einer Klimaanlage verschlossen werden. Dadurch können Kältebrücken verringert werden.

Zur Lösung der oben genannten Aufgabe ist auch ein Anhänger mit einem Spritzschutz vorgesehen, der zwischen einer Ausgangsstellung und einer Rangierstellung verstellt werden kann, wobei der Spritzschutz aus der Rangierstellung in die Ausgangsstellung gebracht wird, wenn der Anhänger im Zugbetrieb verfahren wird. Dies kann beispielsweise durch eine automatische Steuerung geschehen, die erkennt, dass der Anhänger an eine Zugmaschine angekoppelt ist oder von dieser gezogen wird.

Gemäß einer Ausgestaltung kann vorgesehen sein, dass sich der Spritzschutz automatisch in die Ausgangsstellung verstellt, sobald eine vordefinierte Geschwindigkeitsschwelle überschritten wird. Eine solche Lösung ist besonders bedienerfreundlich, da der Spritzschutz nicht extra ausgefahren werden muss, nachdem der Anhänger rangiert wurde.

Gemäß einer vorteilhaften Ausgestaltung ist vorgesehen, dass der Spritzschutz passiv in die Ausgangsstellung verstellt wird. Dies kann insbesondere durch den Fahrtwind oder die Drehung des Reifens erfolgen. Es ist auch denkbar, dass der Spritzschutz dann in die Ausgangsstellung verstellt wird, wenn Regen und/oder Schmutz erfasst wird.

Zur Lösung der oben genannten Aufgabe ist auch ein Anhänger vorgesehen, der einen Rangierantrieb, ein Rad, das von dem Rangierantrieb angetrieben werden kann, einen Radkasten, in dem das Rad angeordnet ist, und einen Spritzschutz aufweist, der in den Radkasten integriert ist. Hinsichtlich der sich ergebenden Vorteile wird auf die obigen Erläuterungen verwiesen.

Die Erfindung wird nachfolgend anhand verschiedener Ausführungsformen näher erläutert, die in den beigefügten Zeichnungen dargestellt sind. In diesen zeigen:
- Figur 1 einen Rangierantrieb gemäß einer ersten Ausführungsform der Erfindung;
- Figur 2 einen Rangierantrieb gemäß einer zweiten Ausführungsform der Erfindung;
- Figur 3 einen Rangierantrieb gemäß einer dritten Ausführungsform der Erfindung;
- Figur 4 einen Rangierantrieb gemäß einer vierten Ausführungsform der Erfindung;
- Figur 5 einen Rangierantrieb gemäß einer fünften Ausführungsform der Erfindung;
- Figur 6 einen Rangierantrieb gemäß einer sechsten Ausführungsform der Erfindung;
- die Figuren 7 und 8 einen Rangierantrieb gemäß einer siebten Ausführungsform der Erfindung in einer Seitenansicht und einer Draufsicht;
- die Figuren 9 und 10 einen Rangierantrieb gemäß einer achten Ausführungsform der Erfindung in einer Seitenansicht und einer Draufsicht;
- die Figuren 11 und 12 einen Rangierantrieb gemäß einer neunten Ausführungsform der Erfindung in einer Draufsicht und einer Seitenansicht;
- die Figuren 13 und 14 einen Rangierantrieb gemäß einer zehnten Ausführungsform der Erfindung in einer Seitenansicht und einer Draufsicht;
- Figur 15 einen Rangierantrieb gemäß einer elften Ausführungsform der Erfindung;
- Figur 16 einen Rangierantrieb gemäß einer zwölften Ausführungsform der Erfindung;
- Figur 17 einen Rangierantrieb gemäß einer dreizehnten Ausführungsform der Erfindung;
- Figur 18 einen Rangierantrieb gemäß einer vierzehnten Ausführungsform der Erfindung;
- Figur 19 einen Rangierantrieb gemäß einer fünfzehnten Ausführungsform der Erfindung;
- Figur 20 einen Rangierantrieb gemäß einer achtzehnten Ausführungsform der Erfindung; und
- Figur 21 ein Detail von Figur 20.

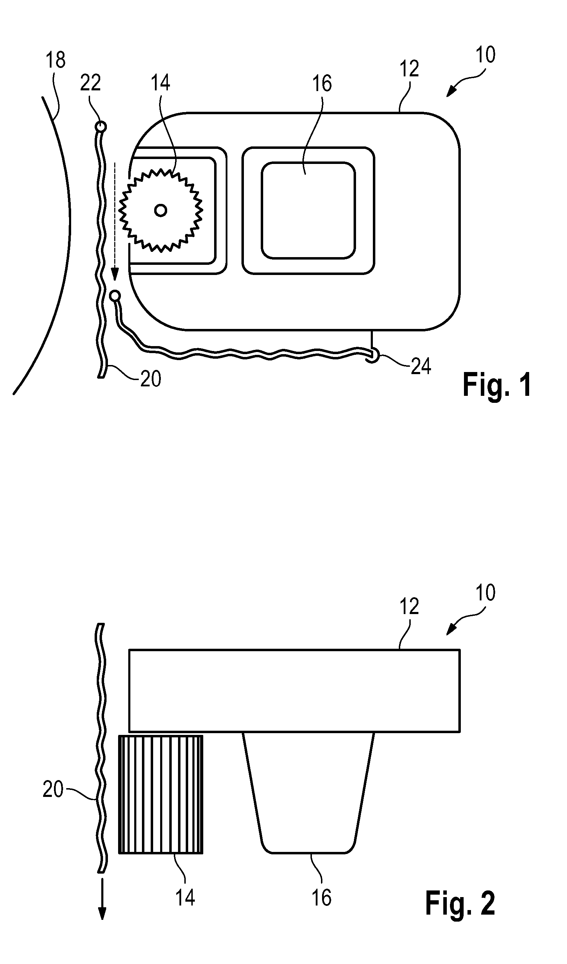

In Figur 1 ist schematisch ein Rangierantrieb 10 gezeigt, der ein Gehäuse 12 und eine Antriebsrolle 14 aufweist. Im Inneren des Gehäuses 12 ist ein Elektromotor in einem Motorengehäuse 16 angeordnet, der über ein Getriebe mit der Antriebsrolle 14 verbunden ist. Zur Energieversorgung ist eine (nicht gezeigte) Batterie vorgesehen.

Der Rangierantrieb dient dazu, einen Anhänger, insbesondere einen Caravan oder Ähnliches, dann elektrisch betrieben zu verstellen, wenn der Anhänger nicht mit der Zugmaschine gekoppelt ist. Im Falle eines Caravans kann der Rangierantrieb insbesondere dazu verwendet werden, diesen auf einem Campingplatz zu manövrieren und in die endgültige Position zu verfahren.

Der Rangierantrieb 10 befindet sich, wenn er nicht benötigt wird (also insbesondere wenn der Anhänger an eine Zugmaschine gekoppelt ist), in einer Ausgangsstellung, in der die Antriebsrolle 14 sich im Abstand von einem in Figur 1 schematisch gezeigten Rad 18 des Anhängers befindet. Um den Anhänger mittels des Rangierantriebs 10 verfahren zu können, wird der Rangierantrieb aus der in Figur 1 gezeigten Ausgangsstellung in eine Rangierstellung gebracht, in der die Antriebsrolle 14 am Rad 18 des Anhängers angreift. Hierzu ist ein (nicht weiter dargestellter) Andruckmechanismus vorgesehen, mit dem der Rangierantrieb entweder translatorisch oder rotatorisch so verstellt werden kann, dass die Antriebsrolle 14 an die Lauffläche des Rades 18 angelegt wird.

Am Anhänger und insbesondere am Rangierantrieb 10 bzw. dem Rangierantrieb 10 zugeordnet ist ein Spritzschutz 20 vorgesehen, der verhindern soll, dass Wasser, Schmutz oder Steinchen, die vom Rad 18 des Anhängers im Fahrbetrieb aufgewirbelt werden, in Richtung eines hinterherfahrenden Fahrzeugs geschleudert werden. Der Spritzschutz 20 ist also in Fahrtrichtung des Anhängers gesehen knapp hinter dem Rad 18 des Anhängers angebracht. Bei einem einachsigen Anhänger wird auf jeder Seite des Anhängers ein Spritzschutz vorgesehen. Bei einem zweiachsigen Anhänger kann entweder ein einziger Spritzschutz hinter dem hintersten Rad angebracht sein, oder jedem der Räder jeder Fahrzeugseite kann ein Spritzschutz zugeordnet sein.

Als Spritzschutz kann insbesondere eine Gummi- oder Kunststoffmatte verwendet werden, wie sie grundsätzlich für denselben Einsatzzweck bei Lastkraftwagen bekannt sind.

Bei der in Figur 1 gezeigten Ausführungsform ist der Spritzschutz 20 an einer Aufhängung 22 angebracht. Diese kann dem Radkasten des Anhängers, dem Rahmen des Anhängers oder auch dem Rangierantrieb 10 zugeordnet sein.

Im Hinblick auf die optimale Wirksamkeit des Spritzschutzes 20 ist dieser unmittelbar hinter dem Rad 18 und somit zwischen der Lauffläche des Rades 18 und der Antriebsrolle 14 angeordnet, wenn sich der Rangierantrieb 10 in der Ausgangsstellung befindet.

Um den Rangierantrieb in Betrieb nehmen zu können, muss der Spritzschutz 20 aus dem Bereich zwischen der Lauffläche des Rades 18 und der Antriebsrolle 14 entfernt werden. Zu diesem Zweck ist die Aufhängung 22 hier bewegbar ausgeführt, sodass der Spritzschutz 20 aus der Ausgangsstellung, in der er sich zwischen dem Rad 18 und der Antriebsrolle 14 befindet, in eine Rangierstellung verstellt werden kann, in der die Antriebsrolle 14 ungehindert vom Spritzschutz mit der Lauffläche des Rades 18 in Eingriff gebracht werden kann. Bei dieser Ausführungsform ist hier ein Haken 24 vorgesehen, an dem das untere Ende des Spritzschutzes 20 befestigt werden kann, wenn dieser sich in der Rangierstellung befindet.

Bei der in Figur 2 gezeigten Ausführungsform wird der Spritzschutz 20, um ihn aus der Ausgangsstellung in die Rangierstellung zu bringen, nicht im Wesentlichen in vertikaler Richtung bewegt, sondern seitlich in der Richtung des Pfeils P aus dem Raum zwischen der Lauffläche des Rades 18 und der Antriebsrolle 14 herausgezogen.

Zur Anbringung des Spritzschutzes 20 bei der zweiten Ausführungsform kann eine Profilschiene verwendet werden, beispielsweise ein Alu-Profil, in das der verdickte obere Rand des Spritzschutzes seitlich eingeschoben wird. Dieser Rand kann beispielsweise mit einem Keder versehen sein. An der Profilschiene kann ein Verriegelungsmechanismus vorgesehen sein, beispielsweise eine Bügel- oder Schnappfeder oder ein Schnapphaken, mit dem der Spritzschutz 20 in der Profilschiene verriegelt werden kann und der leicht von Hand gelöst werden kann.

Bei beiden Ausführungsformen können (nicht dargestellte) Sensoren vorgesehen sein, die erfassen, in welcher Position sich der Spritzschutz gerade befindet. Falls ein Bediener den Rangierantrieb aus der Ausgangsstellung in die Rangierstellung bringen möchte, während der Spritzschutz 20 sich noch in der Ausgangsstellung befindet, kann ein Warnsignal ausgegeben werden.

Es ist auch möglich, dass ein Bediener, wenn er den Rangierantrieb aus der Rangierstellung in die Ausgangsstellung zurückgestellt hat, optisch und/oder akustisch daran erinnert wird, dass der Spritzschutz wieder in die Ausgangsstellung gebracht werden muss, also bei der ersten Ausführungsform vom Haken 24 gelöst werden muss und bei der zweiten Ausführungsform in die Profilschiene eingeschoben werden muss.

Bei der dritten Ausführungsform ist der Spritzschutz 20 und insbesondere seine Aufhängung 22 so mit dem Rangierantrieb 10 und dessen Andruckmechanismus gekoppelt, dass er automatisch aus der Ausgangsstellung in die Rangierstellung verstellt wird (symbolisiert durch die beiden Teile A), wenn die Antriebsrolle 14 aus der Ausgangsstellung in die Rangierstellung verstellt wird (symbolisiert durch den Pfeil P). Hierdurch kann ein nur schematisch angedeuteter Koppelmechanismus 26 verwendet werden, beispielsweise eine Gestängeverbindung oder auch eine Verstellvorrichtung mit Servomotor.

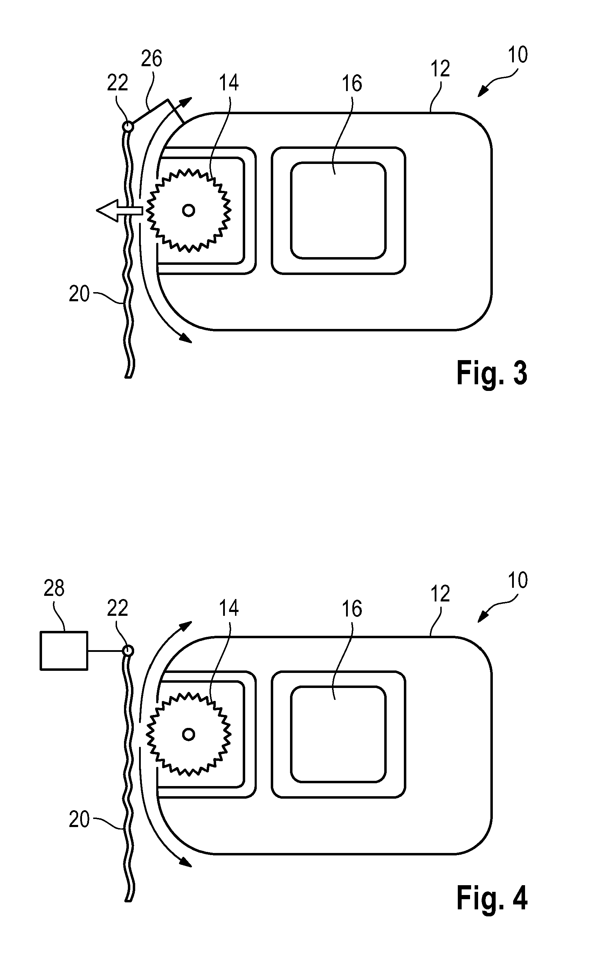

Bei der Ausführungsform gemäß Figur 4 ist vorgesehen, dass der Spritzschutz 20 durch einen separaten Verstellantrieb 28 aus der Ausgangsstellung in die Rangierstellung verstellt werden kann. Dies wird beispielsweise durch einen Bediener separat ausgelöst, bevor der Rangierantrieb aktiviert wird.

Bei der vierten Ausführungsform kann eine Warnfunktion implementiert sein, die verhindert, dass der Rangierantrieb 10 aus der Ausgangsstellung in die Rangierstellung verstellt wird, wenn sich der Spritzschutz 20 weiterhin in seiner Ausgangsstellung befindet.

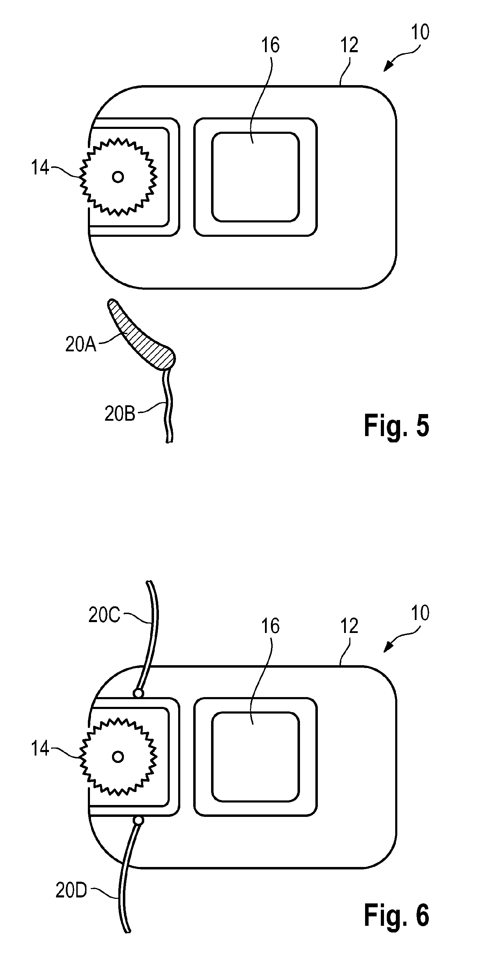

Bei der Ausführungsform gemäß Figur 5 ist der Spritzschutz zweiteilig ausgeführt, nämlich in der Form eines starren Spoilerelements 20A, das sich unmittelbar an das Gehäuse 12 des Rangierantriebs 10 anschließt, und an das flexible Spritzschutzelement 20B, das am Spoilerelement 20A angebracht ist. Der Vorteil dieser Ausführungsform besteht darin, dass der Spoiler nicht aus dem Raum zwischen der Antriebsrolle 14 und dem Rad 18 des Anhängers heraus bewegt werden muss, bevor der Rangierantrieb 10 aktiviert wird.

Bei der in Figur 6 gezeigten Ausführungsform wird wiederum ein zweiteiliger Spritzschutz verwendet. Dieser besteht hier aus einem oberen Teil 20C, das oberhalb der Antriebsrolle 14 angeordnet ist, und einem unteren Teil 20D, der unterhalb der Antriebsrolle 14 angebracht ist. Auf diese Weise ist der gesamte Bereich hinter dem Rad 18 abgedeckt, nämlich zuerst vom oberen Teil 20C, dann von der Antriebsrolle 14 und dann vom unteren Teil 20D.

Die Teile 20C, 20D können aus unterschiedlichen Materialien bestehen. Beispielsweise kann für den oberen Teil 20C ein Material mit geringerer Flexibilität verwendet werden, beispielsweise Kunststoff, während für den unteren Teil 20D Gummi oder ein ähnlich flexibles und aufschlagdämpfendes Material verwendet wird.

Auch bei der Ausführungsform gemäß Figur 6 ergibt sich der Vorteil, dass der Spritzschutz nicht entfernt werden muss, wenn der Rangierantrieb 10 aus der Ausgangsstellung in die Rangierstellung verstellt wird.

Die beiden Teile 20C, 20D des Spoilers können austauschbar am Rangierantrieb 10 angebracht sein, beispielsweise durch eine Clipsverbindung.

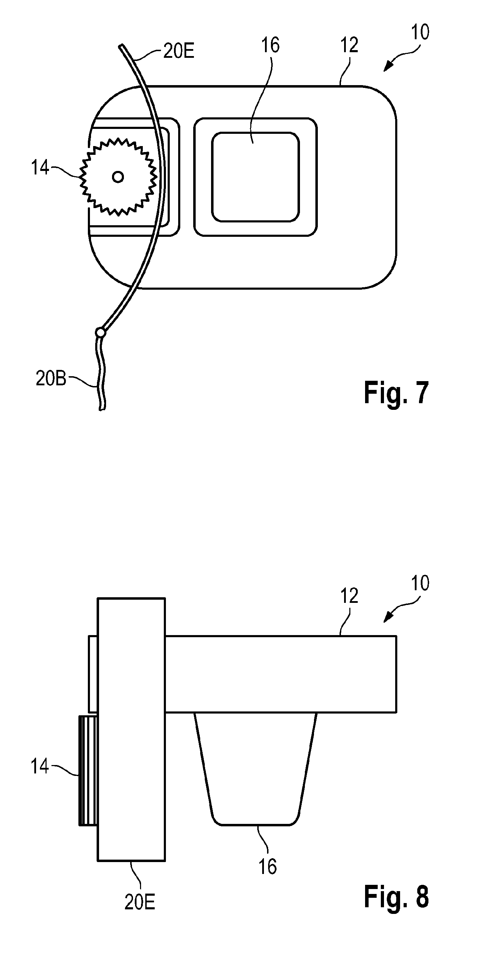

In den Figuren 7 und 8 ist eine Ausführungsform gezeigt, bei der ein Spritzschutz verwendet wird, der aus einem starren Spritzschutzteil 20E und einem flexiblen Spritzschutzelement 20B zusammengesetzt ist. Das Spritzschutzteil 20E ist nach Art eines Schutzbleches oder Kotflügels ausgeführt und erstreckt sich um die Antriebsrolle 14 herum auf deren vom Rad 18 abgewandter Seite. Auch bei dieser Ausführungsform ergibt sich der Vorteil, dass der Spritzschutz nicht entfernt oder verstellt werden muss, wenn der Rangierantrieb 10 aktiviert werden soll.

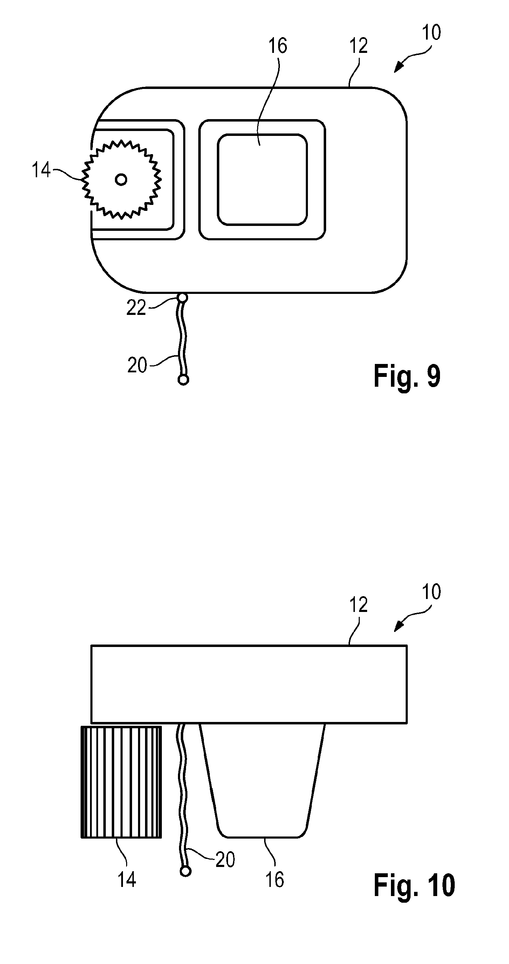

In den Figuren 9 und 10 ist eine Ausführungsform gezeigt, bei der ein einziger Spritzschutz 20 verwendet wird, der hier unterhalb des Rangierantriebs 10 angebracht ist. Im Unterschied zu den vorherigen Ausführungsformen ist der Spritzschutz 20 hier an der Unterseite des Gehäuses 12 des Rangierantriebs 10 angebracht, beispielsweise mittels einer Aufhängung 22, die dort fest angebracht ist und in seitlicher Richtung so weit über das Gehäuse 12 hinaussteht (siehe Figur 10), dass der Spritzschutz 20 seitlich etwas über die Antriebsrolle 14 hervorsteht.

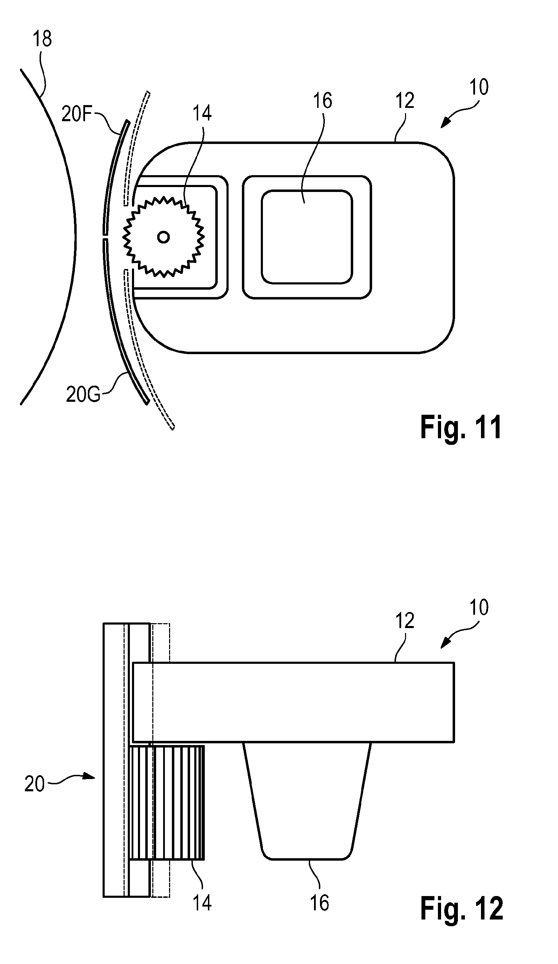

In den Figuren 11 und 12 ist eine Ausführungsform gezeigt, bei welcher der Spritzschutz 20 aus zwei Teilelementen 20F, 20G gebildet ist, die beide aus einem Material mit einer gewissen Eigensteifigkeit bestehen. Das untere Teil 20G kann zu seinem unteren Ende hin eine geringere Steifigkeit aufweisen oder, wenn es beispielsweise als Zweikomponententeil ausgeführt ist, aus einem anderen Material bestehen, beispielsweise Gummi.

In der in Figur 11 in durchgehenden Linien gezeigten Ausgangsstellung liegen die beiden Teile 20F, 20G aneinander an, und zwar etwa auf der mittleren Höhe der Antriebsrolle 14. Auf diese Weise ist zwischen dem Rad 18 und der Antriebsrolle 14 ein durchgehender Spritzschutz gebildet, der außerdem nach Art eines Einklemmschutzes wirkt.

Wenn der Rangierantrieb 10 aus der Ausgangsstellung in die Rangierstellung verstellt wird, werden die beiden Teile 20F, 20G in die in Figur 11 gestrichelt gezeigte Position verstellt, also im Wesentlichen auseinandergezogen, sodass die Antriebsrolle 14 mittig zwischen ihnen hindurchtreten und mit der Lauffläche des Rades 18 in Eingriff gelangen kann.

Zum Verstellen der beiden Teile 20F, 20G des Spritzschutzes 20 kann eine Kulissenführung verwendet werden. Entweder wird ein separater Antrieb für die beiden Teile 20F, 20G vorgesehen. Alternativ ist auch möglich, über eine Kulissenführung oder einen Hebelmechanismus die Bewegung des Rangierantriebs 10, die dieser ausführt, um aus der Ausgangsstellung in die Rangierstellung zu gelangen, in die Öffnungsbewegung der beiden Teile 20F, 20G umzusetzen.

Der besondere Vorteil dieser Ausgestaltung liegt darin, dass ein Einklemmschutz realisiert wird, da die Antriebsrolle erst kurz vor dem Zeitpunkt zugänglich gemacht wird, zu dem sie am Rad 18 angreift.

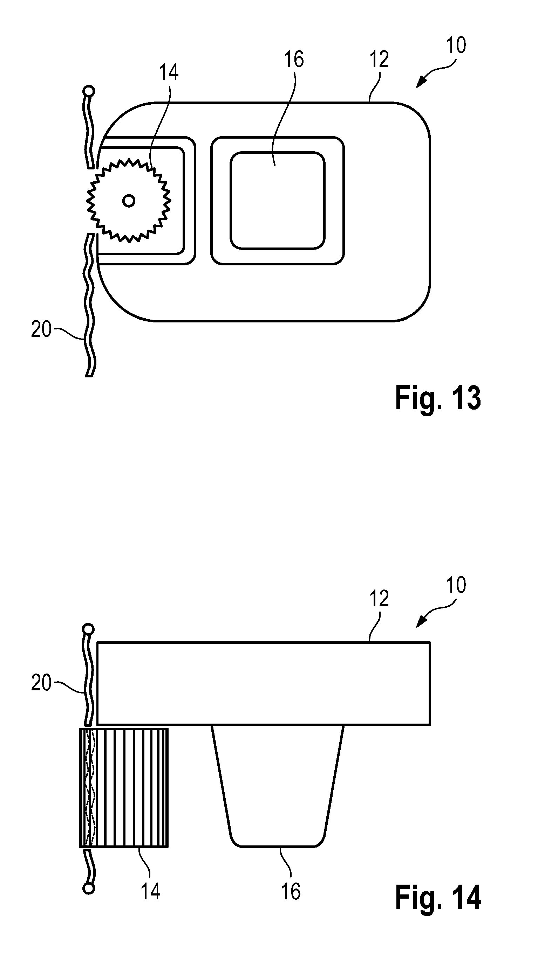

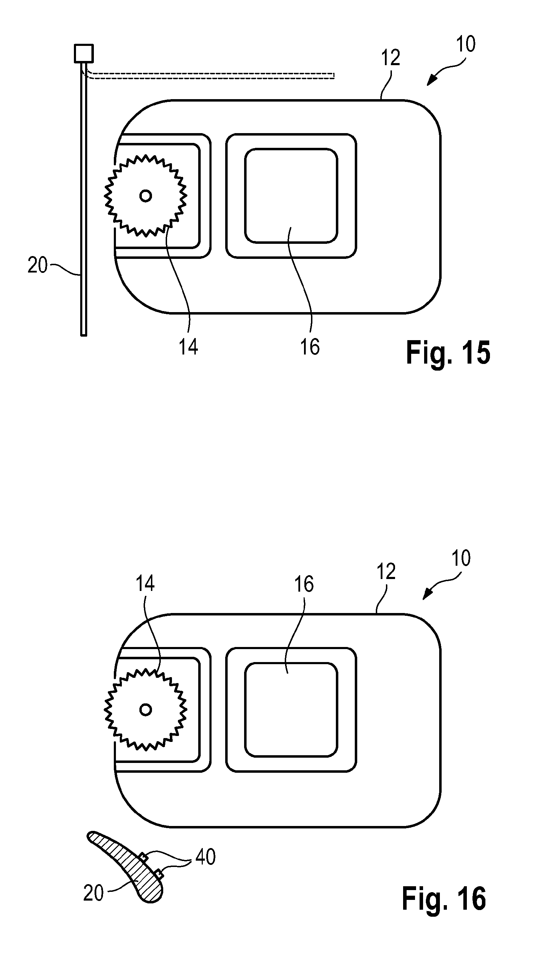

In den Figuren 14 und 15 ist eine Ausführungsform gezeigt, bei der der Spritzschutz mit einer vordefinierten Öffnung versehen ist, beispielsweise mittels einer Perforation, sodass ein Bediener dann, wenn er den Rangierantrieb 10 aktiviert, den entsprechenden Teil aus dem Spritzschutz herausbricht und so die Öffnung schafft, durch die hindurch die Antriebsrolle 14 des Rangierantriebs 10 an der Lauffläche des Rades 18 angreifen kann.

Bei dieser Ausführungsform kann der Spritzschutz 20 insbesondere leicht austauschbar ausgeführt sein, beispielsweise als Einwegspritzlappen, der jedes Mal dann durch einen neuen ersetzt wird, wenn die Öffnung aus dem Spritzschutz herausgebrochen wurde.

In Figur 15 ist eine Ausführungsform gezeigt, bei der der Spritzschutz aus der in durchgehenden Linien gezeigten Ausgangsstellung in die gestrichelt gezeigte Rangierstellung dadurch verstellt wird, dass er hochgeklappt und beispielsweise auf dem Rangierantrieb 10 abgelegt wird. Wenn der Rangiervorgang abgeschlossen ist, kann der Spritzschutz 20 wieder heruntergeklappt werden.

In Figur 16 ist eine Ausführungsform gezeigt, bei welcher der Spritzschutz 20 ähnlich wie bei der in Figur 5 gezeigten Ausführungsform einen Spoiler aufweist. Dieser ist hier mit schematisch angedeuteten Sensoren 40 versehen, mit denen verschiedene Zusatzfunktionen verwirklicht werden können, beispielsweise eine Erkennung des Straßenzustands, eine Schlingererkennung oder Ähnliches.

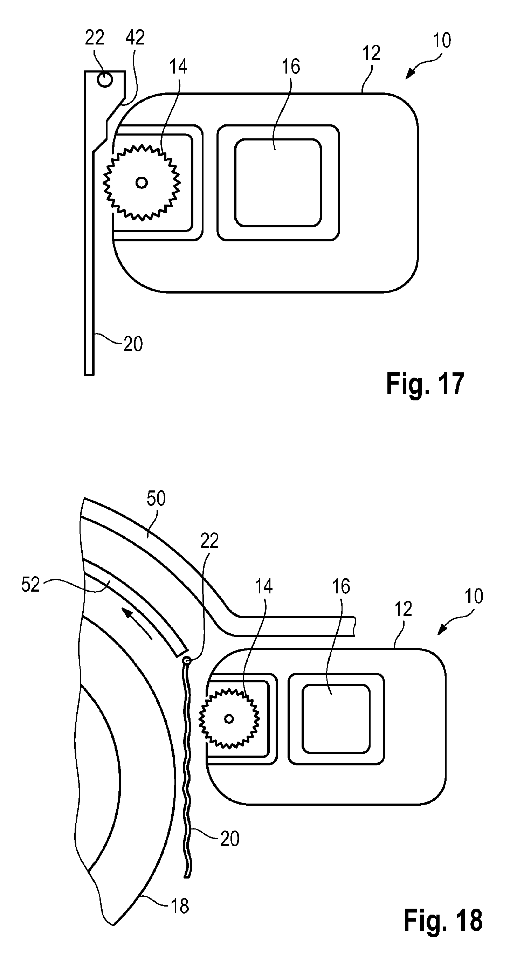

In Figur 17 ist eine Ausführungsform gezeigt, bei welcher der Spritzschutz 20 ähnlich wie bei früheren Ausführungsformen in einer Aufhängung 22 angebracht ist. Wesentliches Merkmal der Ausführungsform gemäß Figur 17 besteht darin, dass in den Keil eine Zusatzfunktion integriert ist.

Bei der gezeigten Ausführungsform ist das obere Ende des Spritzschutzes 20 verdickt ausgeführt, sodass ein zweistufiger Auffahrkeil 42 verwirklicht ist. Der Spritzschutz kann also, wenn der Rangierantrieb 10 aktiviert werden soll, von der Aufhängung 22 entfernt und dann dazu verwendet werden, den Anhänger horizontal auszurichten.

Der Spritzschutz 20 kann auch so ausgestaltet werden, dass er zum Abdecken oder Verschließen von Bodenöffnungen verwendet werden kann, beispielsweise den Bodenausschnitten einer Klimaanlage. Auf diese Weise kann beispielsweise beim Wintercamping der Wärmeverlust an die Umgebung verringert werden. In gleicher Weise wie bei der Verwendung des Spritzschutzes als Auffahrkeil ist hierfür eine gewisse Mindeststeifigkeit sinnvoll.

In Figur 18 ist eine Ausgestaltung gezeigt, bei welcher der Spritzschutz 20 in den Radkasten 50 des Anhängers integriert ist. Zu diesem Zweck ist die Aufhängung 22 an einer Halterung 52 angebracht, die entweder manuell oder automatisch verstellt werden kann, um den Spritzschutz 20 aus der Ausgangsstellung in die Rangierstellung zu bringen. Hierfür kann ein separater Antrieb, beispielsweise mittels eines Servomotors, verwendet werden, oder es kann der Rangierantrieb 10 über ein Gestänge, ein Antriebskabel, etc. so mit der Halterung 52 gekoppelt sein, dass die Halterung 52 geeignet dann verstellt wird, wenn der Rangierantrieb 10 aus der Ausgangsstellung in die Rangierstellung verstellt wird.

Es ist auch möglich, die Halterung 52 passiv zu verstellen, beispielsweise in Abhängigkeit vom Fahrtwind oder einer Drehung des Rades 18. Dies gewährleistet, dass der Spritzschutz 20 automatisch in die Ausgangsstellung zurückgestellt wird, wenn der Anhänger im Zugbetrieb bewegt wird.

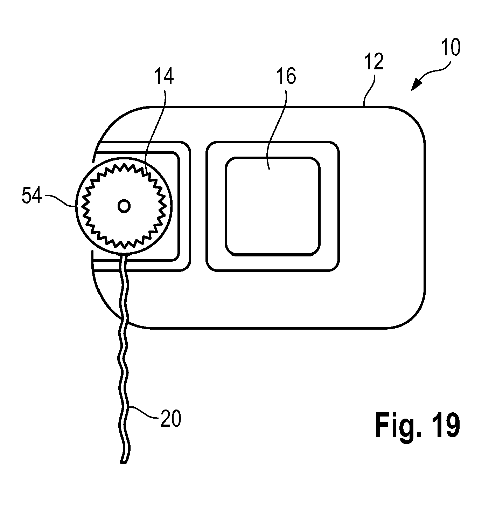

In Figur 19 ist eine Ausführungsform gezeigt, bei der das obere Ende des Spritzschutzes 20 mit einem hülsenförmigen Aufsteckabschnitt 54 versehen ist, das in axialer Richtung auf die Antriebsrolle 14 aufgeschoben werden kann. Der Aufsteckabschnitt 54 ist flexibel und mit einem geringen Untermaß gegenüber der Antriebsrolle 14 ausgeführt, sodass der Spritzschutz 20 zuverlässig auf der Antriebsrolle während der Fahrt des Anhängers fixiert ist.

Bei dieser manuellen Lösung wird ein Bediener intuitiv beim Aktivieren des Rangierantriebs 10 daran erinnert, dass der Spritzschutz 20 von der Antriebsrolle 14 abgenommen werden muss, damit diese mit der Lauffläche des Rades 18 in Eingriff gebracht werden kann. Außerdem dient der Spritzschutz 20 bei dieser Ausführungsform als Verschmutzungsschutz für die Antriebsrolle 14.

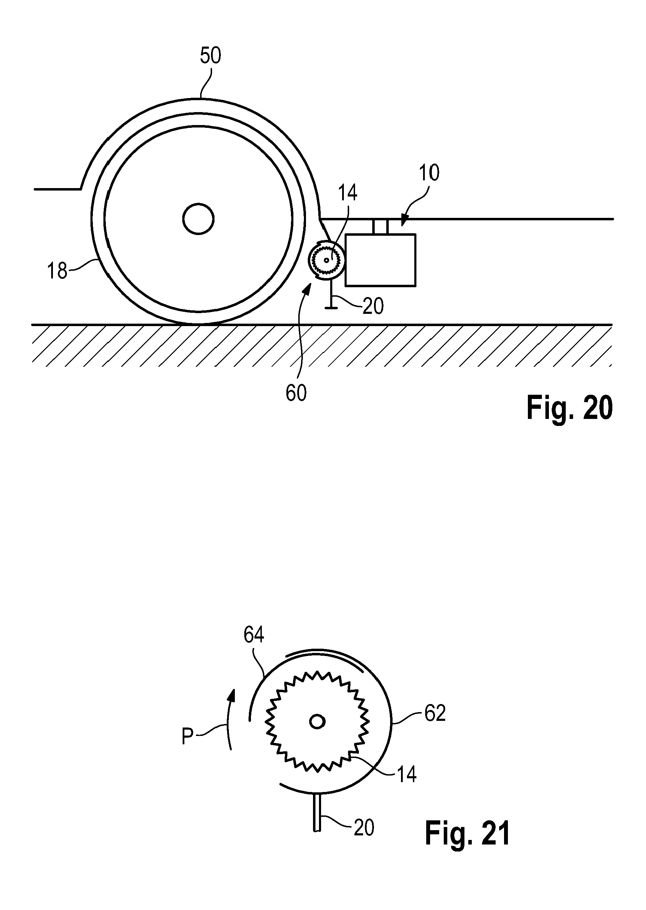

In den Figuren 20 und 21 ist eine Ausführungsform gezeigt, bei der der Spritzschutz 20 an einer Verkleidung 60 angebracht ist, welche die Antriebsrolle 14 umgibt. Die Verkleidung 60 (siehe insbesondere Figur 21) besteht aus zwei schalenartigen Teilen 62, 64, von denen das Teil 62 feststehend ausgeführt ist und die Antriebsrolle 14 um etwas mehr als 180° umgibt. Das zweite Teil 64 ist relativ zum ersten Teil 62 bewegbar ausgeführt und erstreckt sich über einen solchen Winkelbereich, dass die Antriebsrolle 14, wenn sich das Teil 64 in der Ausgangsstellung befindet, zusammen mit dem feststehenden Teil 62 vollständig umschlossen ist. Damit die Antriebsrolle 14 in Eingriff mit der Lauffläche des Rades 18 gebracht werden kann, kann das zweite Teil 64 der Verkleidung 60 relativ zum feststehenden Teil 62 verschwenkt werden (siehe den Pfeil P in Figur 21), sodass die Verkleidung auf der dem Rad 18 zugewandten Seite geöffnet ist. Das zweite Teil 64 kann insbesondere konzentrisch mit der Antriebsrolle 14 verschwenkt werden. Wenn auch das feststehende Teil 62 konzentrisch mit der Antriebsrolle 14 ausgeführt ist, ergibt sich insgesamt eine sehr kompakte Baugruppe.

## Patentansprüche

1. Rangierantrieb (10) für einen Anhänger oder dgl., mit einem Antriebsmotor, einer Antriebsrolle (14) für ein Rad (18) des Anhängers und einem Spritzschutz (20), der mit dem Rangierantrieb zu einer Baugruppe integriert ist.

2. Rangierantrieb nach Anspruch 1, **dadurch gekennzeichnet, dass** der Spritzschutz (20) zwischen einer Ausgangsstellung und einer Rangierstellung bewegbar ist.

3. Rangierantrieb nach Anspruch 2, **dadurch gekennzeichnet, dass** ein Haken vorgesehen ist, mit dem der Spitzschutz (20) in der Rangierstellung fixierbar ist.

4. Rangierantrieb nach einem der vorhergehenden Ansprüche, **dadurch gekennzeichnet, dass** der Spritzschutz (20) lösbar angebracht ist.

5. Rangierantrieb nach Anspruch 4, **dadurch gekennzeichnet, dass** eine Clipsverbindung vorgesehen ist, mittels der der Spritzschutz (20) angeclipst werden kann.

6. Rangierantrieb nach Anspruch 4, **dadurch gekennzeichnet, dass** eine Aufhängung (22) vorgesehen ist, in die der Spritzschutz (20) seitlich einschiebbar ist.

7. Rangierantrieb nach einem der vorhergehenden Ansprüche, **dadurch gekennzeichnet, dass** der Spritzschutz (20) Teil des Rangierantriebs ist.

8. Rangierantrieb nach Anspruch 7, **dadurch gekennzeichnet, dass** der Spritzschutz (20) als Teil eines Gehäuses (12) des Rangierantriebs (10) ausgeführt ist.

9. Rangierantrieb nach Anspruch 7, **dadurch gekennzeichnet, dass** der Spritzschutz (20) am Rangierantrieb (10) angebracht ist.

10. Rangierantrieb nach einem der Ansprüche 7 bis 9, **dadurch gekennzeichnet, dass** der Rangierantrieb (10) mit einem Andruckmechanismus versehen ist, mit dem er und damit die Antriebsrolle (14) aus einer Ausgangsstellung in eine Rangierstellung verstellt werden kann, und dass der Spritzschutz (20) so am Rangierantrieb (10) angeordnet ist, dass er sich in der Rangierstellung befindet, wenn sich der Rangierantrieb (10) in der Rangierstellung befindet.

11. Rangierantrieb nach einem der Ansprüche 7 bis 9, **dadurch gekennzeichnet, dass** der Rangierantrieb (10) mit einem Andruckmechanismus versehen ist, mit dem die Antriebsrolle (14) aus einer Ausgangsstellung in eine Rangierstellung verstellt werden kann, und dass der Spritzschutz (20) mit dem Andruckmechanismus gekoppelt ist, sodass er automatisch aus der Ausgangsstellung in die Rangierstellung gebracht wird, wenn die Antriebsrolle (14) aus der Ausgangsstellung in die Rangierstellung gebracht wird.

12. Rangierantrieb nach Anspruch 11, **dadurch gekennzeichnet, dass** der Spritzschutz (20) seitlich aus dem Bereich zwischen der Antriebsrolle (14) und dem Rad (18) verstellt wird.

13. Rangierantrieb nach Anspruch 11, **dadurch gekennzeichnet, dass** der Spritzschutz (20) in vertikaler Richtung aus dem Bereich zwischen der Antriebsrolle (14) und dem Rad (18) verstellt wird.

14. Rangierantrieb nach Anspruch 11, **dadurch gekennzeichnet, dass** der Spritzschutz (20) zweiteilig so ausgeführt ist, dass die beiden Teile (20F, 20G) auseinandergezogen werden können, sodass zwischen ihnen ein Freiraum für die Antriebsrolle (14) gebildet wird.

15. Rangierantrieb nach einem der vorhergehenden Ansprüche, **dadurch gekennzeichnet, dass** die Antriebsrolle (14) mit einer Verkleidung (60) versehen ist, welche sie zumindest auf der dem Rad zugewandten Seite verkleidet, und dass der Spritzschutz (20) an der Verkleidung (60) vorgesehen ist.

16. Rangierantrieb nach Anspruch 15, **dadurch gekennzeichnet, dass** die Verkleidung aus zumindest zwei Teilen (62, 64) besteht, die relativ zueinander zwischen einer Ausgangsstellung, in der die Antriebsrolle zumindest auf der dem Rad (18) zugewandten Seite umschlossen ist, und einer Rangierstellung verstellbar ist, in der die Antriebsrolle (14) mit dem Rad (18) in Eingriff gebracht werden kann.

17. Rangierantrieb nach Anspruch 16, **dadurch gekennzeichnet, dass** die beiden Teile als ineinander verschiebbare Schalen (62, 64) ausgeführt sind.

18. Rangierantrieb nach einem der vorhergehenden Ansprüche, **dadurch gekennzeichnet, dass** der Spritzschutz (20) mit einer Öffnung für die Antriebsrolle versehen ist.

19. Rangierantrieb nach einem der vorhergehenden Ansprüche, **dadurch gekennzeichnet, dass** der Spritzschutz (20) nach Art eines Rollos ausgeführt ist.

20. Rangierantrieb nach Anspruch 19, **dadurch gekennzeichnet, dass** der Spritzschutz (20) als Abreißabschnitt einer Rollobahn ausgeführt ist.

21. Rangierantrieb nach einem der vorhergehenden Ansprüche, **dadurch gekennzeichnet, dass** der Spritzschutz (20) mit einem Reflektor versehen ist.

22. Rangierantrieb nach einem der vorhergehenden Ansprüche, **dadurch gekennzeichnet, dass** dem Spritzschutz (20) einen Sensor (40) zugeordnet ist.

23. Rangierantrieb nach einem der vorhergehenden Ansprüche, **dadurch gekennzeichnet, dass** der Sensor (40) ein Schlingersensor ist.

24. Rangierantrieb nach einem der vorhergehenden Ansprüche, **dadurch gekennzeichnet, dass** der Sensor (40) ein Straßenzustandssensor ist.

25. Rangierantrieb nach einem der vorhergehenden Ansprüche, **dadurch gekennzeichnet, dass** der Sensor (40) ein Neigungssensor ist.

26. Rangierantrieb nach einem der vorhergehenden Ansprüche, **dadurch gekennzeichnet, dass** eine Radverhüllung integriert ist.

27. Rangierantrieb nach einem der vorhergehenden Ansprüche, **dadurch gekennzeichnet, dass** ein Spoiler integriert ist.

28. Rangierantrieb nach einem der vorhergehenden Ansprüche, **dadurch gekennzeichnet, dass** der Spritzschutz (20) eine Oberfläche mit Nanoeffekt aufweist.

29. Rangierantrieb nach einem der vorhergehenden Ansprüche, **dadurch gekennzeichnet, dass** der Spritzschutz (20) als Auffahrkeil ausgeführt ist.

30. Rangierantrieb nach einem der vorhergehenden Ansprüche, **dadurch gekennzeichnet, dass** der Spritzschutz (20) als Reinigungselement für die Antriebsrolle ausgeführt ist.

31. Rangierantrieb nach einem der vorhergehenden Ansprüche, **dadurch gekennzeichnet, dass** der Spritzschutz (20) als Verschlusselement für eine Bodenöffnung des Anhängers ausgeführt ist.

32. Anhänger mit einem Spritzschutz, der zwischen einer Ausgangsstellung und einer Rangierstellung verstellt werden kann, wobei der Spritzschutz (20) aus der Rangierstellung in die Ausgangsstellung gebracht wird, wenn der Anhänger im Zugbetrieb verfahren wird.

33. Anhänger nach Anspruch 32, **dadurch gekennzeichnet, dass** sich der Spritzschutz (20) automatisch in die Ausgangsstellung verstellt, sobald eine vordefinierte Geschwindigkeitsschwelle überschritten wird.

34. Anhänger nach Anspruch 33, **dadurch gekennzeichnet, dass** der Spritzschutz (20) passiv in die Ausgangsstellung verstellt wird.

35. Anhänger mit einem Rangierantrieb (10), einem Rad (18), das von dem Rangierantrieb angetrieben werden kann, einem Radkasten (50), in dem das Rad angeordnet ist, und einem Spritzschutz (20), der in den Radkasten integriert ist.
